# EUROPÄISCHE PATENTSCHRIFT

(11) **EP 2 901 426 B1**
(45) Veröffentlichungstag und Bekanntmachung des Hinweises auf die Patenterteilung: **05.07.2023**
(21) Anmeldenummer: 13770839.2
(22) Anmeldetag: 27.09.2013
(51) Int. Cl.: B42D 25/36, G07D 7/1205, G07D 7/20, G07D 7/12

(54) **VERFAHREN ZUR HERSTELLUNG EINES WERTDOKUMENTS**
METHOD FOR PRODUCING A VALUE DOCUMENT
PROCÉDÉ POUR LA PRODUCTION D'UN DOCUMENT DE VALEUR

(30) Priorität: 28.09.2012 DE 102012019251
(43) Veröffentlichungstag der Anmeldung: 05.08.2015
(73) Patentinhaber: Giesecke+Devrient Currency Technology GmbH, 81677 München (DE)
(72) Erfinder: GIERING, Thomas, 85614 Kirchseeon (DE); KECHT, Johann, 81677 München (DE); RAUSCHER, Wolfgang, 94365 Parkstetten (DE); STEINLEIN, Stephan, 80538 München (DE)
(74) Vertreter: Giesecke + Devrient IP
(86) Internationale Anmeldenummer: PCT/EP2013/002918
(87) Internationale Veröffentlichungsnummer: WO 2014/048577

(56) Entgegenhaltungen:
- EP-A1- 0 947 964
- DE-A1-102008 034 021
- US-A1- 2010 155 679

## Beschreibung

Die Erfindung betrifft ein Verfahren zur Herstellung eines Wertdokuments mit lumineszierenden Merkmalsstoffen.

Die Echtheitssicherung von Wertdokumenten mittels lumineszierender Substanzen ist seit langem bekannt. Bevorzugt werden mit Seltenerdmetallen dotierte Wirtsgitter eingesetzt, wobei durch geeignete Abstimmung von Seltenerdmetall und Wirtsgitter die Absorptions- und Emissionsbereiche in einem breiten Bereich variiert werden können. Auch die Verwendung magnetischer und elektrisch leitfähiger Materialien zur Echtheitssicherung ist bekannt. Magnetismus, elektrische Leitfähigkeit und Lumineszenzemission sind durch im Handel verfügbare Messgeräte maschinell nachweisbar, Lumineszenz bei Emission im sichtbaren Bereich in ausreichender Intensität auch visuell.

Die WO 2005/036481 A1 beschreibt eine Vorrichtung und ein Verfahren zur Prüfung von Wertdokumenten mit lumineszierenden Merkmalsstoffen. Indem die Auswertung der erfassten Lumineszenzstrahlung auf der Grundlage einer integrierten Lumineszenzmessung durchgeführt wird, d.h. durch eine Integration der gemessenen Lumineszenzstrahlung einer sich quer über das Wertdokument erstreckenden Spur, ist eine besonders leichte Erfassung und Unterscheidung von schwach leuchtenden Merkmalsstoffen möglich. Aus der DE 10 2005 033 598 A1 ist ein blattförmiges Wertdokument mit lumineszierenden Merkmalsstoffen und die Herstellung und Prüfung eines solchen Wertdokuments bekannt. Das darin beschriebene Wertdokument enthält einen lumineszierenden Merkmalsstoff, der sowohl vollflächig mit geringer Konzentration, als auch an bestimmten Teilflächen mit höherer Konzentration vorhanden ist.

Die US 2010/0155679 A1 offenbart ein Verfahren nach dem Oberbegriff des Anspruchs 1.

Ausgehend von dem vorangehend zitierten Stand der Technik liegt der vorliegenden Erfindung die Aufgabe zugrunde, ein Verfahren zur Herstellung eines in Bezug auf die Fälschungssicherheit verbessertes Wertdokuments bereitzustellen.

Diese Aufgabe wird durch das Verfahren nach Anspruch 1 gelöst. Vorteilhafte Weiterbildungen ergeben sich aus den abhängigen Ansprüchen.

### Ausführliche Beschreibung der Erfindung

Die Begriffe Häufigkeitsverteilung, Kenngröße, Varianz, Standardabweichung, Histogramm, relative Häufigkeit, Modus bzw. Modalwert bzw. Gipfel, unimodale bzw. eingipflige (Häufigkeits-)Verteilung, bimodale bzw. zweigipflige (Häufigkeits-)Verteilung sind literaturbekannt (siehe z.B.: E. Hering, R. Martin, M. Stohrer "Physik für Ingenieure", VDI-Verlag GmbH, 3. Auflage 1989, Kapitel 1.3.2. "Meßgenauigkeit"; K. Ulshöfer, H. Hornschuh "Mathematische Formelsammlung", Verlag Konrad Wittwer Stuttgart, 1984, Kapitel 6.1 "Beschreibende Statistik, Datenerhebung"; Wikipedia (Stand: 21.09.2012) - Die freie Enzyklopädie: http://de.wikipedia.org/wiki/Bimodale_Verteilung).

Zur statistischen Analyse der ortsabhängigen Lumineszenzdaten können unterschiedliche mathematische Verfahren verwendet werden. Im Folgenden werden einige bevorzugte statistische Methoden und Kenngrößen genannt, welche für diesen Zweck besonders gut geeignet sind.

Bevorzugt erfolgt eine Auswertung der ortsabhängigen Lumineszenzdaten mit Methoden der deskriptiven Statistik (Descriptive Statistics). Dabei wird beispielsweise eine Banknote pixelweise gerastert, oder an mehreren, zufällig ausgewählten Stellen, vermessen, und aus den resultierenden Daten eine oder mehrere der folgenden Kennzahlen aus dem Gebiet der deskriptiven Statistik berechnet. Diese werden dann zur Sortierung bzw. Echtheitsbestimmung der Banknoten mit Schwellwerten verglichen. Dabei bezeichnet ein Schwellwert (alternativ auch als Schwelle oder Grenzwert bezeichnet) einen bestimmten absoluten oder relativen Zahlenwert, bei dessen Über- oder Unterschreiten eine unterschiedliche Einteilung in der Klassifizierung des Wertdokuments vorgenommen wird, beispielsweise die Unterscheidung von echten/unechten Wertdokumenten oder die Einteilung in unterschiedliche Denominationen und/ oder Währungen.

Die deskriptive Statistik unterteilt Kenngrößen unter anderem in Lagemaße (Location Measures) wie Mittelwert, Median und Quantile, sowie Streuungsmaße (auch Dispersionsmaße oder Dispersion Measures genannt) wie Standardabweichung, mittlere absolute Abweichung und Interquartilebereich. Bevorzugt wird zur Bewertung der ortsabhängigen Lumineszenzdaten mindestens eine Kenngröße aus dem Bereich der Streuungsmaße verwendet. Bevorzugt werden intensitätskorrigierte Streuungsmaße verwendet, das heißt, die Streuungsmaße werden unter Zuhilfenahme von Lagemaßen normiert oder korrigiert.

Ein weiteres Teilgebiet der deskriptiven Statistik sind Formmaße (Shape Measures) wie die Schiefe (Skewness) und die Quartile Schiefe (Quartile Skewness) einer Verteilung. Diese werden bevorzugt zur Analyse von Lumineszenzintensitätsverteilungen eingesetzt, welche eine Rechts- oder Linksschiefe aufweisen. Solche Verteilungen können beispielsweise durch Verwendung rechts- oder linksschiefer monomodaler bzw. bimodaler oder polymodaler Korngrößenverteilungen von Luminophoren erzeugt werden. Weiterhin können allgemeine Maße (General Measures) der deskriptiven Statistik verwendet werden, beispielsweise das k-te Zentralmoment E((X-µ)^{k}), welches für k=2 die Varianz, für k=3 die Schiefe und für k=4 die Wölbung einer Verteilung beschreibt.

Alternativ oder ergänzend zu den eben beschriebenen Methoden der deskriptiven Statistik werden bevorzugt Methoden aus dem Bereich der numerischen Klassifikationsverfahren verwendet, wobei diese bevorzugt auf Häufigkeitsverteilungsdaten angewendet werden. Hierzu wird beispielsweise eine Banknote pixelweise gerastert, oder an mehreren, zufällig ausgewählten Stellen, vermessen, und die resultierenden Intensitätswerte in n Häufigkeitsklassen unterteilt, so dass man für jede Banknote einen Häufigkeitsvektor als n-Tupel erhält. Dieser Vektor entspricht einem Punkt im n-dimensionalen Raum Rⁿ. Die so bei einer Vielzahl von Noten erhaltenen Punktwolken in diesem Raum können besonders vorteilhaft mit Methoden der numerischen Klassifikationsverfahren bewertet werden, um die Banknoten in unterschiedliche Klassifikationen wie echt/unecht oder unterschiedliche Denominationen und/oder Währungen einzuteilen. Beispiele für geeignete numerische Klassifikationsverfahren sind die statistische Klassifikation, die Nächste-Nachbarn-Klassifikation, die Quader-Klassifikation, der Polynomklassifikator, Support Vektor Maschinen (SVM), und neuronale Netze.

Weiterführende Literatur zum obigen Thema:
(1) H. Niemann: "Klassifikation von Mustern", Springer-Verlag, Berlin 1983, ISBN 3-540-12642-2. Seiten 159-261, sowie erweiterte Online-Version, Seiten 303-481, erhältlich unter (Stand: 21.09.2012): http://www5.informatik.unierlangen.de/fileadmin/Persons/NiemannHeinrich/klassifikation-vonmustern/m001inks.html
(2) Software "Mathematica" von der Firma Wolfram Research.

Weiterführende Informationen zum obigen Thema sind im Internet (Stand: 21.09.2012) auf den folgenden Seiten erhältlich:
http://en.wikipedia.org/wiki/Descriptive_statistics
http:/ / de.wikipedia.org/wiki/ Dispersionsmaße
http://de.wikipedia.org/wiki/Schiefe_(Statistik)

Wertdokumente im Rahmen der Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise CDs, Verpackungen und ähnliches. Das bevorzugte Anwendungsgebiet sind Banknoten, die insbesondere auf einem Papiersubstrat beruhen.

Lumineszierende Stoffe (hierin auch als Luminophore bezeichnet) werden standardmäßig zur Absicherung von Banknoten eingesetzt. Im Falle eines lumineszierenden Echtheitsmerkmals, das z.B. an verschiedenen Stellen im Papier einer Banknote eingebracht ist, unterliegen die Lumineszenzsignale des Merkmals an den verschiedenen Stellen natürlicherweise gewissen Schwankungen. Der vorliegenden Erfindung liegt die Erkenntnis zugrunde, dass sich die statistische Fluktuation der räumlichen Signalintensitätsverteilung durch Wahl geeigneter Faktoren, z.B. durch Einstellen bestimmter Korngrößenverteilungen des lumineszierenden Echtheitsmerkmals, gezielt beeinflussen lässt. Dabei werden vorzugsweise Korngrößenverteilungen gewählt, die mittels eines herkömmlichen Mahl- oder Herstellungsprozess nicht, oder nur schwer erreichbar sind. Geeignete Korngrößenverteilungen sind z.B.
- lumineszierende Partikel mit monomodaler Größenverteilung, die insbesondere eng teilchengrößenverteilt sind und insbesondere Korngrößen (D99) zwischen 10µm und 30µm besitzen;
- lumineszierende Partikel mit bimodaler Korngrößenverteilung, d.h. neben einer ersten Spezies mit einem Durchmesser dₘ₁ ist eine zweite Spezies mit einem Durchmesser dₘ₂ vorhanden, wobei dₘ₁ < dₘ₂ ist.

Die lumineszierenden Partikel können z.B. auf einem eine Matrix bildenden anorganischen Festkörper basieren, der mit einem oder mehreren Seltenerdmetallen oder Übergangsmetallen dotiert ist.

Geeignete anorganische Festkörper, die zur Bildung einer Matrix geeignet sind, sind beispielsweise:
Oxide, insbesondere 3- und 4-wertige Oxide wie z. B. Titanoxid, Aluminiumoxid, Eisenoxid, Boroxid, Yttriumoxid, Ceroxid, Zirconoxid, Bismutoxid, sowie komplexere Oxide wie z. B. Granate, darunter u. A. z.B. Yttrium-Eisen-Granate, Yttrium-Aluminium-Granate, Gadolinium-Gallium-Granate;
Perowskite, darunter u.A. Yttrium-Aluminium-Perowskit, Lanthan-Gallium-Perowskit; Spinelle, darunter u. A. Zink-Aluminium-Spinelle, Magnesium-Aluminium-Spinelle, Mangan-Eisen-Spinelle; oder Mischoxide wie z.B. ITO (Indiumzinnoxid);
Oxyhalogenide und Oxychalkogenide, insbesondere Oxychloride wie z. B. Yttriumoxychlorid, Lanthanoxychlorid; sowie Oxysulfide, wie z.B. Yttriumoxysulfid, Gadoliniumoxysulfid;
Sulfide und andere Chalkogenide, z.B. Zinksulfid, Cadmiumsulfid, Zinkselenid, Cadmiumselenid;
Sulfate, insbesondere Bariumsulfat und Strontiumsulfat;
Phosphate, insbesondere Bariumphosphat, Strontiumphosphat, Calciumphosphat, Yttriumphosphat, Lanthanphosphat, sowie komplexere phosphatbasierte Verbindungen wie z.B. Apatite, darunter u. A. Calciumhydroxylapatite, Calciumfluoroapatite, Calciumchloroapatite; oder Spodiosite, darunter z.B. Calcium-Fluoro-Spodiosite, Calcium-Chloro-Spodiosite;
Silicate und Aluminosilicate, insbesondere Zeolithe wie z.B. Zeolith A, Zeolith Y; zeolithverwandte Verbindungen wie z.B. Sodalithe; Feldspate wie z.B. Alkalifeldspate, Plagioklase;
weitere anorganische Verbindungsklassen wie z.B. Vanadate, Germanate, Arsenate, Niobate, Tantalate.

Es wird bevorzugt, lumineszierende Partikel zu verwenden, die im nicht sichtbaren Spektrum, d.h. im UV- oder NIR-Bereich, emittieren (die Abkürzung "NIR" bezeichnet den Begriff "nahes Infrarot"). Mit Bezug auf die Einbringung der lumineszierenden Partikel in Wertdokumente, z.B. Banknoten, wird bevorzugt, dass die Partikel höchstens eine Korngröße von 30 µm, besonders bevorzugt höchstens eine Korngröße von 20 µm aufweisen.

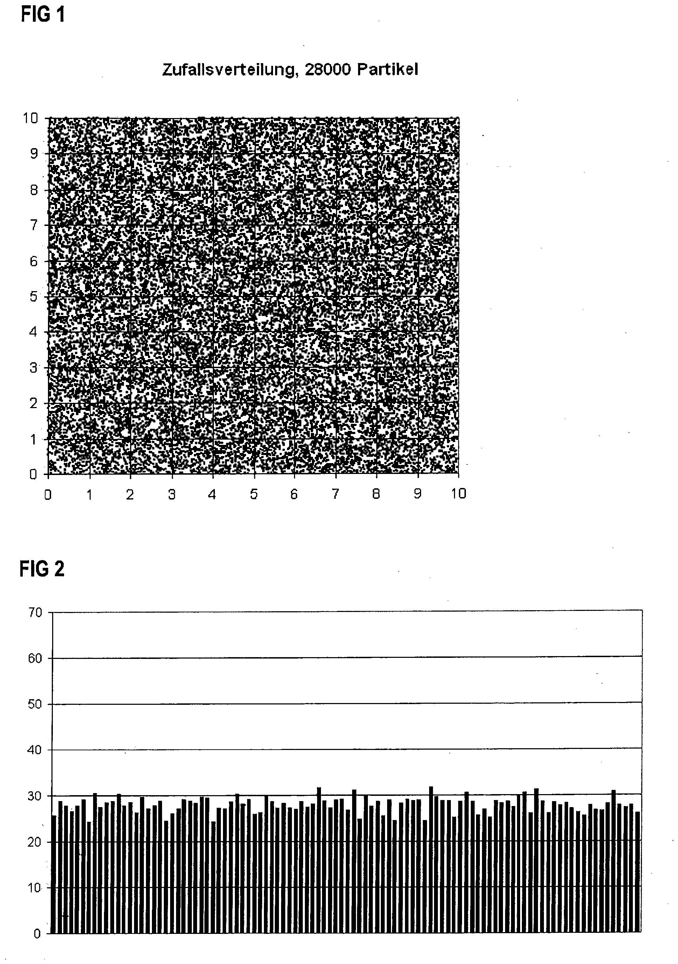

Das der Erfindung zugrunde liegende Prinzip wird nachstehend im Detail in Verbindung mit den Figuren 1 bis 6 anhand einer ersten bevorzugten Ausführungsform beschrieben.

### Erste bevorzugte Ausführungsform

Die Echtheitsbestimmung eines lumineszierenden Echtheitsmerkmals erfolgt herkömmlich mittels geeigneter Sensoren, die die Lumineszenz an mindestens einem Ort, in der Regel an mehreren Orten, des Wertdokuments durch Anregung mit Licht einer geeigneten Wellenlänge detektieren. Mit Bezug auf eine korrekte Erkennung und Beurteilung der Echtheit wäre es wünschenswert, an allen potentiellen Messpunkten des Wertdokuments ein konstantes Lumineszenzsignal zu messen, z.B. über den gesamten Papierkörper einer Banknote hinweg ein homogenes Lumineszenzsignal zu detektieren. Dies wird unter Anderem durch eine hohe Luminophorkonzentration und eine große Messfläche begünstigt, da hier bei jeder Messung eine hohe Anzahl von Luminophorpartikeln erfasst wird und somit eine gute Mittelung entsteht.

Demgegenüber werden aus Sicherheits- und Kostengründen üblicherweise möglichst geringe Mengen an Merkmalsstoff eingesetzt. Es herrscht also eine relativ geringe Konzentration an Luminophorpartikeln vor. Die minimale einzubringende Menge hängt unter Anderem von der Effizienz und Leuchtkraft des Merkmalsstoffs ab, somit werden gerade die zur Absicherung am geeignetsten, hocheffizienten Merkmalsstoffe in besonders geringer Konzentration eingesetzt. Ebenso ist es aus messtechnischer Sicht oft vorteilhafter, die Anregung durch intensive Bestrahlung eines kleinen Messflecks zu erreichen, anstatt großflächig mit niedriger Intensität anzuregen. Die Kombination aus geringer Luminophorkonzentration und kleinem Messbereich fördert dabei eine erhöhte statistische Fluktuation des Messsignals. Figuren 1 bis 6 zeigen diesen Zusammenhang schematisch.

In den Figuren 1 bis 6 ist der Einsatz dreier verschiedener Luminophorpartikel-Klassen gezeigt, die eine unterschiedliche Leuchtkraft pro Partikel aufweisen. Die unterschiedliche Leuchtkraft kann dabei z.B. auf unterschiedlichen Partikelgrößen oder auf einer Änderung der chemischen Zusammensetzung, wie z.B. der Dotierstoffkonzentration, beruhen. Zur Vereinfachung wurde hierbei die Annahme getroffen, dass alle Luminophorpartikel einer jeweiligen Klasse homogen sind, d.h. alle Luminophorpartikel weisen die gleiche Größe und eine identische Zusammensetzung auf.

Fig. 1 zeigt die Zufallsverteilung von 28 000 Luminophorpartikeln mit einer relativen Leuchtkraft von 0,1 in einem 10x10-Feld. Fig. 2 zeigt das resultierende Lumineszenzsignal (d.h. die gemessene Lumineszenzintensität) für jedes der Felder 1 bis 10 (Y-Achse) in den Reihen 1 bis 10 (X-Achse).

Fig. 3 zeigt die Zufallsverteilung von 2 800 Luminophorpartikeln mit einer relativen Leuchtkraft von 1,0 in einem 10x10-Feld. Fig. 4 zeigt das resultierende Lumineszenzsignal (d.h. die gemessene Lumineszenzintensität) für jedes der Felder 1 bis 10 (Y-Achse) in den Reihen 1 bis 10 (X-Achse).

Fig. 5 zeigt die Zufallsverteilung von 700 Luminophorpartikeln mit einer relativen Leuchtkraft von 4,0 in einem 10x10-Feld. Fig. 6 zeigt das resultierende Lumineszenzsignal (d.h. die gemessene Lumineszenzintensität) für jedes der jedes der Felder 1 bis 10 (Y-Achse) in den Reihen 1 bis 10 (X-Achse).

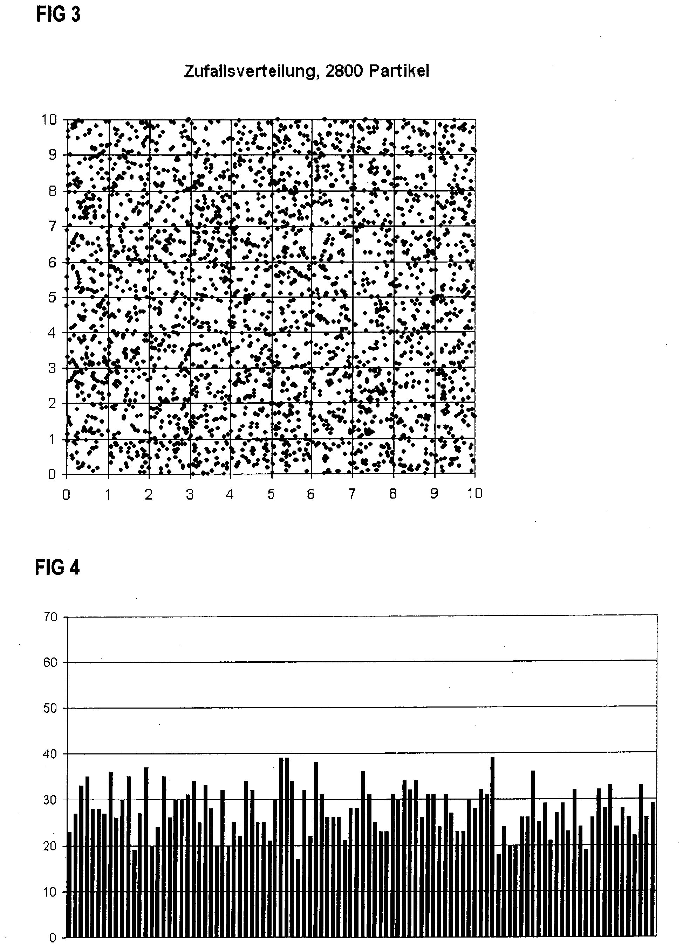

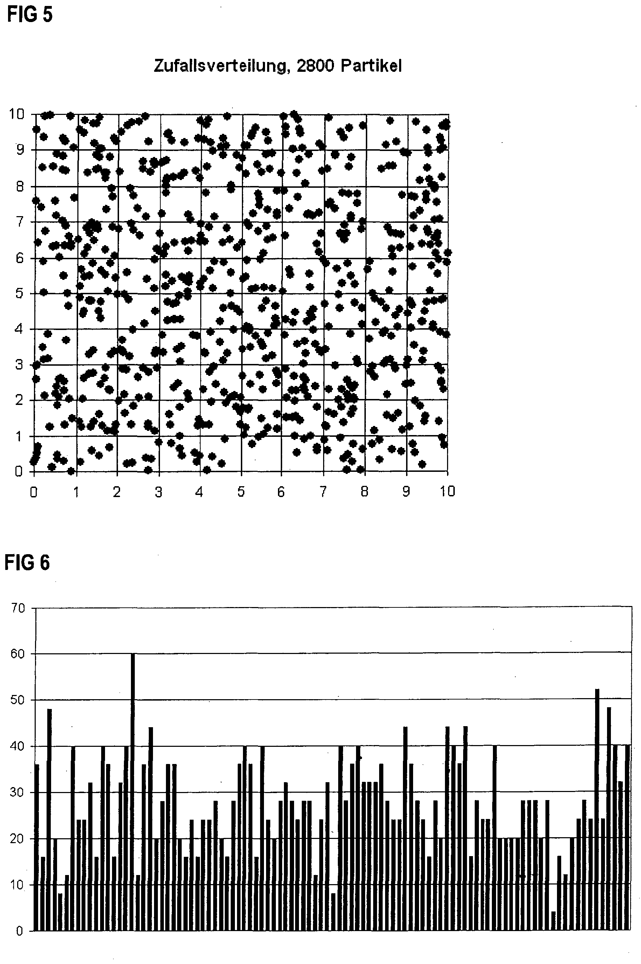

Um in allen drei Fällen ein im Mittel gleich starkes Signal zu erhalten, müssen jeweils eine unterschiedliche Anzahl an Partikeln eingesetzt werden. Die im Falle des Einsatzes von vielen, schwach leuchtenden Partikeln erhaltene, sehr homogene Signalverteilung (siehe Fig. 2) fängt im Zuge des Übergangs zu wenigen, intensiver leuchtenden Partikeln immer stärker an zu fluktuieren (siehe Figuren 4 und 6).

Aufgrund der beschriebenen Unterschiede in der statistischen Signalfluktuation ist es möglich, Wertdokument-Klassen, in denen unterschiedliche Luminophorpartikel-Klassen zum Einsatz kommen, sogar bei ansonsten identischen spektralen Eigenschaften, wie z.B. der Lumineszenzbandenlage, dem Anregungsspektrum und der Abklingzeit, voneinander zu unterscheiden, z.B. über eine Analyse der Verteilung und Höhe der Abweichungen vom Signalmittelwert.

Anhand des folgenden nicht beanspruchten Beispiels wird die vorstehende Erläuterung näher beschrieben.

Ausgehend von einem Seltenerd-dotierten Lumineszenzpigment auf YAG-Basis mit einer mittleren Korngröße (A2) werden durch Zermahlen in einer Rührwerkskugelmühle ein feineres Pigment (A1), sowie durch kontrollierte Agglomeration ein gröberes Pigment (A3) hergestellt (siehe Tabelle 1). Tabelle 1: Korngrößen (die Angaben D50, D90 und D99 bezeichnen, dass 50% bzw. 90% bzw. 99% der Partikel einer Korngrößenverteilung Korngrößen aufweisen, die kleiner oder gleich dem angegebenen Wert sind)

| Bezeichnung | D50 [µm] | D90 [µm] | D99 [µm] |
|---|---|---|---|
| A1 | 0,3 | 1,4 | 2,2 |
| A2 | 2,4 | 7 | 11,4 |
| A3 | 11 | 17 | 20 |

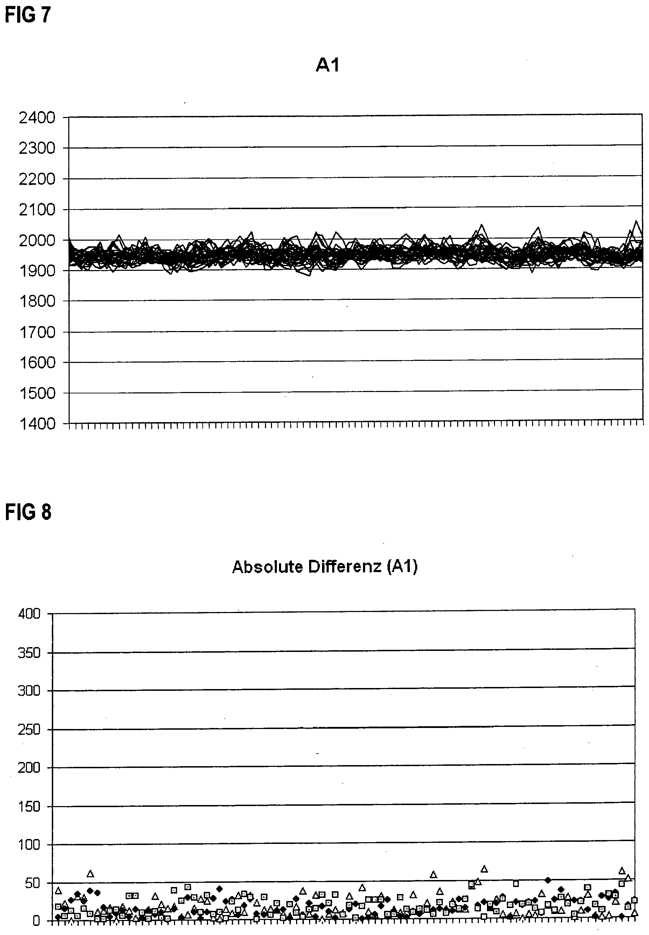

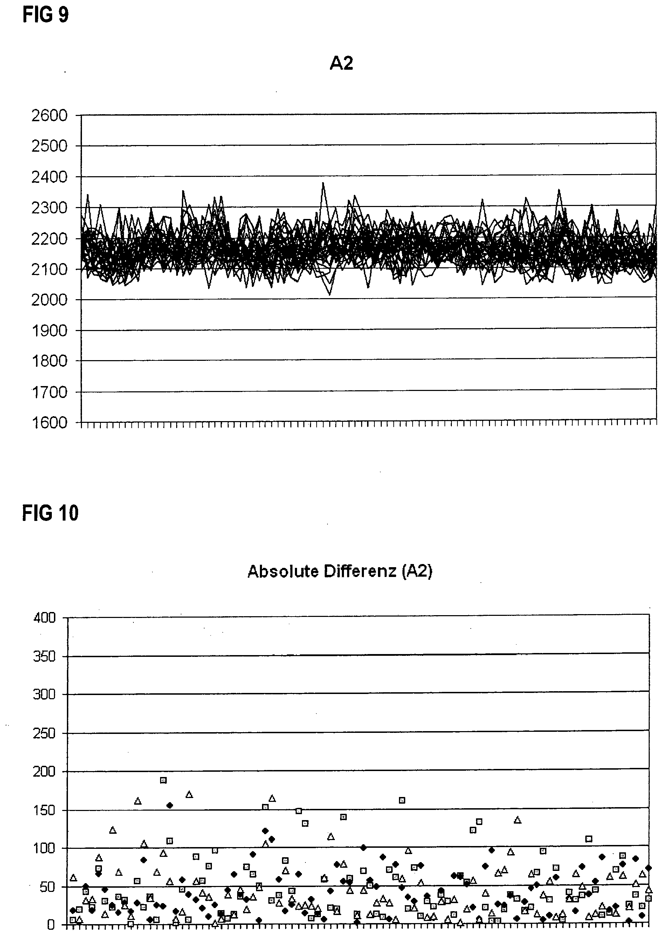

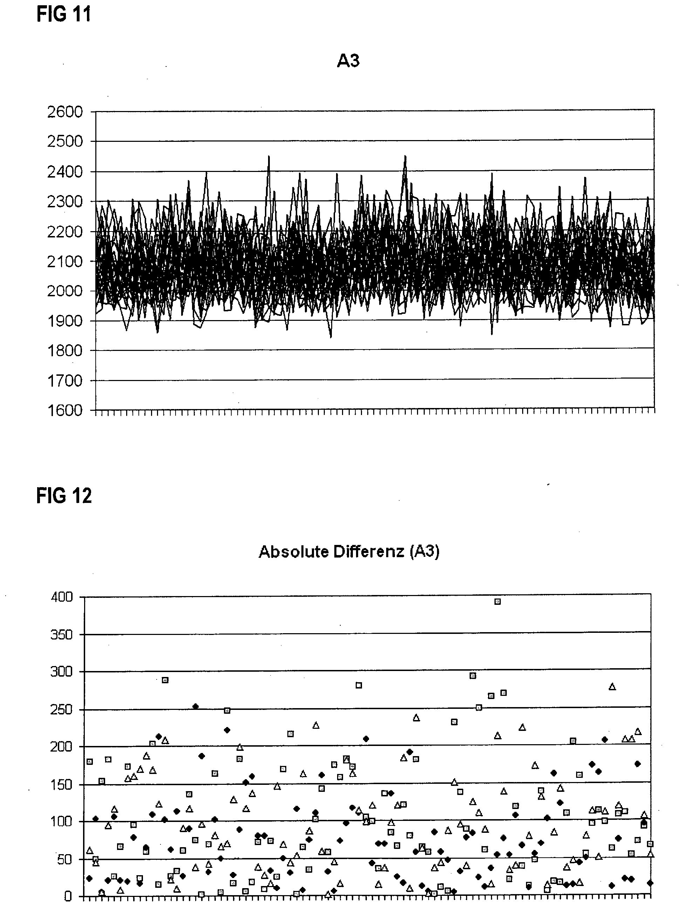

Anschließend wurde in einem Blattbildner je ein Blatt Papier hergestellt, wobei pro Blatt 2 Promille (A1) bzw. 1 Promille (A2, A3) Gewichtsanteil an Merkmalsstoff enthalten ist. Die das Merkmal enthaltenden Blätter wurden danach mittels eines Sensors vermessen. Figuren 7, 9 und 11 zeigen die Messsignale der Blätter. Dabei wurden mehrere Messpunkte an unterschiedlichen Stellen des Blattes vermessen, und die dabei ermittelten Messsignale von aufeinanderfolgenden Messpunkten mit einer Linie verbunden (Messreihe). Die Figuren 7, 9 und 11 zeigen jeweils die Überlagerung einer Vielzahl solcher Messreihen.

Zusätzlich ist in den Figuren 8, 10 und 12 für je drei zufällig gewählte einzelne Messreihen jeweils der Absolutwert der Differenz eines Messsignals zum vorangehenden Messsignal aufgetragen. Die drei verschiedenen Messreihen tragen zur besseren Unterscheidung jeweils unterschiedliche Symbole: weiße Dreiecke, graue Quadrate und schwarze Kreise.

Eine Kenngröße für die Fluktuation des Messsignals ist z.B. der Mittelwert der Absolutwerte dieser Differenzen bei Messung von Messreihen mit 90 Messpunkten. Es ergeben sich hier deutliche Unterschiede für die jeweiligen Proben, wobei nachfolgend jeweils der Mittelwert der Kenngröße gefolgt von seiner Standardabweichung zwischen mehreren Messreihen angegeben ist: A1 (Mittelwert: 16±2); A2 (Mittelwert: 45±4); A3 (Mittelwert: 96±8).

### Erfindungsgemäße Ausführungsform

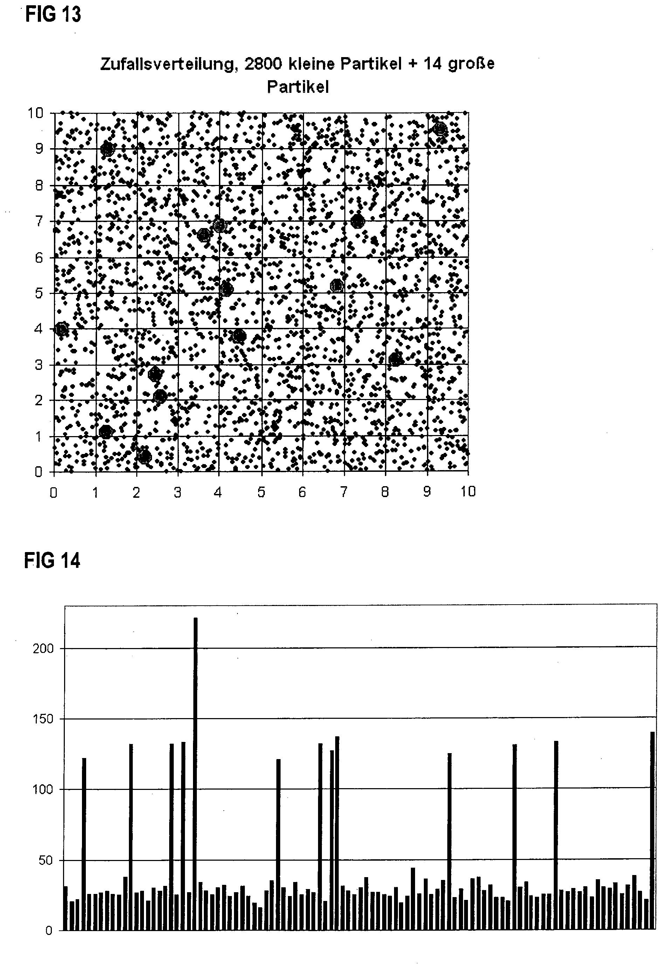

Eine erfindungsgemäße Ausführungsform beruht auf dem Vermischen verschiedener Partikelklassen mit unterschiedlichen Leuchtstärken. So erzeugt z.B. ein lumineszierendes Echtheitsmerkmal mit einer bimodalen Partikelgrößenverteilung eine völlig andere Art von Signalfluktuation als entsprechende monomodale Verteilungen (siehe Figuren 13, 14, 26 und 27).

Fig. 13 zeigt die Zufallsverteilung von Luminophorpartikeln in einem 10x10-Feld, wobei die Luminophorpartikel 2800 Partikel mit einer relativen Leuchtkraft von 1 (kleine Kästchen in der Fig. 13), und 14 Partikel mit einer relativen Leuchtkraft von 100 (große kreisrunde Flecken in Fig. 13) beinhalten. Fig. 14 zeigt das resultierende Lumineszenzsignal (d.h. die gemessene Lumineszenzintensität) für jedes der Felder 1 bis 10 (Y-Achse) in den Reihen 1 bis 10 (X-Achse).

Die verglichen mit der Signalfluktuation in den Figuren 2, 4 und 6 völlig andere Art von Signalfluktuation in der Fig. 14 lässt sich damit begründen, dass die Lumineszenzintensität stark von der Partikelgröße abhängt. So besitzt ein Luminophorpartikel mit einem Durchmesser von 10 µm ein tausendmal höheres Volumen als ein Luminophorpartikel mit einem Durchmesser von nur 1 µm, und eine entsprechend höhere Leuchtkraft. Zusätzlich kann bei kleinen Partikeln leichter Energie an Oberflächendefekten strahlungslos abgegeben werden ("Oberflächenquenching"), wodurch dieser Effekt noch verstärkt wird.

Die jeweils größere Partikelklasse ist somit in der Lage, die kleinere Partikelklasse deutlich zu "überstrahlen", wodurch an Messstellen, die solche Partikel beinhalten, charakteristische, starke Anstiege auf hohe Signalwerte entstehen (sogenannte "Ausreißer" bzw. "Ausreißer-Signale"). Somit entsteht ein Fluktuationsmuster mit eingestreuten starken Peaks, das sich deutlich von dem eines Stoffes mit monomodaler Partikelgrößenverteilung unterscheidet. Dabei kann sowohl die Höhe als auch die Häufigkeit dieser stärkeren Signale ausgewertet werden. Mit geeigneten mathematischen Methoden können auch solche charakteristische, durch bi- oder polymodale Korngrößen verursachte, Fluktuationsmuster identifiziert werden, welche keine starken "Ausreißer" beinhalten. Denn auch wenn die Korngrößen der kleineren und größeren Partikelklasse nicht weit genug auseinander liegen um deutliche "Ausreißer" zu verursachen, können sich die statistischen Kenngrößen solcher Fluktuationsmuster deutlich von denen eines durch monomodale Korngrößenverteilungen verursachten Fluktuationsmusters unterscheiden.

Um reproduzierbare und eindeutig voneinander unterscheidbare Intensitätsverteilungsmuster zu erhalten, ist es vorteilhaft, die Korngrößenverteilung der Ausgangsstoffe maßzuschneidern, um im Falle von bimodalen Verteilungen einen geeigneten Abstand der einzelnen Moden zu erhalten.

Klassischerweise werden Luminophorpartikel nach der Festkörpersynthese mittels Mühlen, z.B. Stiftmühlen oder Rührwerkskugelmühlen, kleingemahlen, bis die zur Anwendung gewünschte Korngröße erreicht ist. Bimodale Verteilungen oder relativ schmale Verteilungen "großer" Partikel (z.B. in einem Bereich von 10 bis 20 µm) können dabei typischerweise nicht erhalten werden. Zwar ist es möglich, durch klassische Zerkleinerungstechniken, wie z.B. Festkörpermahlungen, über eine Variation der Mahldauer oder der Mahlart, unterschiedliche Korngrößenverteilungen zu erzeugen, die sich anhand ihres Fluktuationsverhaltens voneinander unterscheiden lassen. Durch zusätzliche Verfahren lassen sich die Korngrößenverteilungen aber optimieren. Darüber hinaus können auch solche Korngrößenverteilungen erhalten werden, die ansonsten für Sicherheitsmerkmale auf Luminophorbasis ungewöhnlich sind.

So ist es z.B. möglich, durch eine kontrollierte Agglomeration von mittels Vermahlen erhaltenem Feinmaterial wieder größere Partikel-Einheiten zu erzeugen. Durch Wahl geeigneter Agglomerationstechniken können dabei monomodale Korngrößenverteilungen in einem Bereich von 10 µm bis 20 µm erreicht werden. Dieser Größenbereich ist mittels klassischer Synthesetechniken, wie etwa Ofenglühungen, nur schwer erreichbar, da entweder zu kleine Kristallite erzeugt werden, oder zu große Partikel, die beim Mahlprozess wiederum kleinere Bruchstücke erzeugen und somit zu einer breiten Korngrößenverteilung führen.

Aufgrund des deutlichen Unterschieds in der Größenverteilung eignen sich solche Agglomerate bedingt zur Erzeugung von bimodalen Verteilungen, nämlich durch Kombination mit gemahlenem Material mit Korngrößen in einem Bereich von 1 bis 10 µm. Dabei ist zu beachten, dass der Einsatz von entsprechend großen Einkristallen in bestimmten Fällen bevorzugt wird. Durch den Effekt des Oberflächenquenching ist je nach Größe der das Agglomerat zusammensetzenden kleineren Partikel die Lumineszenzintensität im Vergleich zu einem Einkristall deutlich verringert. Somit können hier auch bei scheinbar gleicher Korngrößenverteilung deutliche Unterschiede im Fluktuationsverhalten entstehen.

Es wird daher besonders bevorzugt, Synthesebedingungen zu wählen, in denen z.B. über Ostwaldreifung ohne zusätzliche Mahlschritte bimodale Produkte erhalten werden können. Bei mit denen die Synthese größerer Kristallite unverhältnismäßig aufwändig ist, wird die oben erwähnte Herstellung von Agglomeraten aus Feinmaterial gegenüber dem Zusatz von größeren Kristalliten bevorzugt.

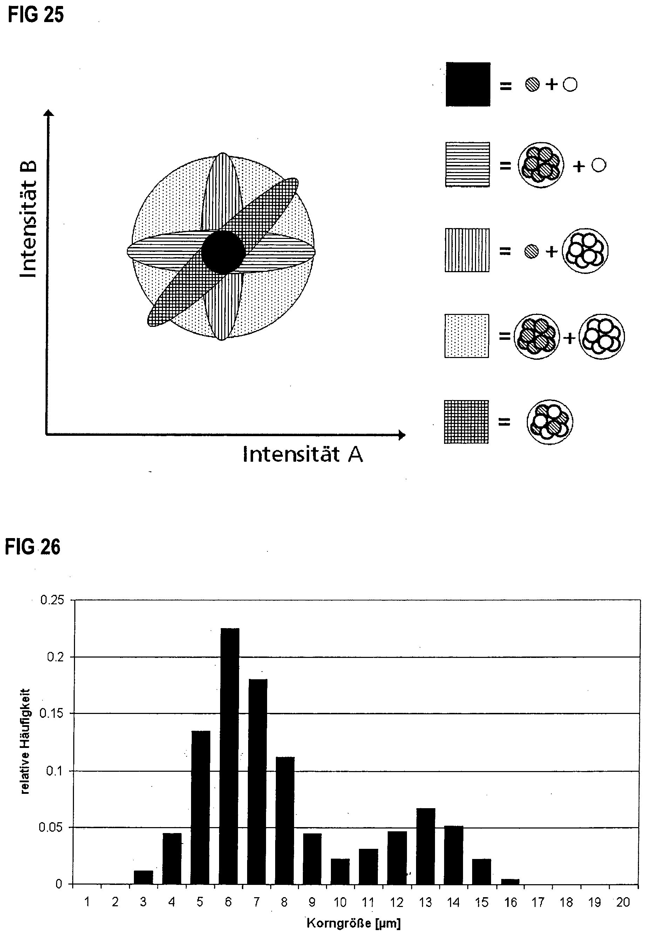

Ergänzend zu der anhand von Figuren 13 und 14 beschriebenen Ausführungsform zeigt Fig. 26 ein schematisches Korngrößen-Histogramm (d.h. die Auftragung der relativen Häufigkeit in Abhängigkeit von der Korngröße) für eine willkürlich gewählte bimodale Verteilung. Die in Fig. 26 gezeigte Verteilung weist eine Überlappung der beiden Gipfel bzw. Maxima auf. Grundsätzlich ist aber auch eine deutlich stärkere Überlappung, oder gar keine Überlappung, der beiden Gipfel möglich.

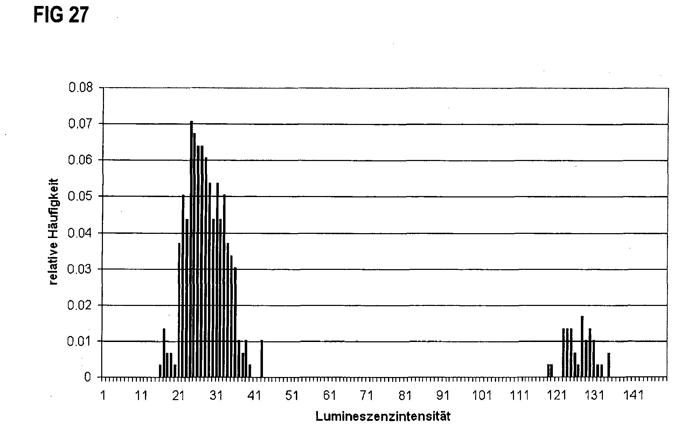

Fig. 27 zeigt ein hypothetisches Histogramm der Lumineszenzintensitäten von 250 Messpunkten unter den gleichen Bedingungen wie die des Modells der Figuren 13 und 14.

### Weiteres nicht beanspruchtes Beispiel

Ein weiteres nicht beanspruchtes Beispiel beruht auf dem Vermischen verschiedener Lumineszenzpartikel mit unterschiedlicher Lumineszenzwellenlänge (siehe das folgende Ausführungsbeispiel).

### <Allgemeine Vorschrift 1 zur Erzeugung eines Lumineszenzpartikel-Agglomerats>

10g NIR-Lumineszenzpigment werden in 60 g Wasser dispergiert. Es werden 120 ml Ethanol sowie 3,5m1 Ammoniak (25%ig) zugegeben. Unter Rühren werden 10 ml Tetraethylorthosilikat zugegeben und die Reaktionsmischung weitere 8 Stunden gerührt.

Das Produkt wird abfiltriert, zweimal mit 40 ml Wasser gewaschen und bei 60°C im Trockenschrank getrocknet. Es werden Partikelagglomerate mit einer Korngröße D99=20-30 µm erhalten.

Die erhaltenen Agglomerate werden eine Stunde lang bei 300°C getempert und anschließend mit einer Ultrazentrifugalmühle behandelt. Man erhält ein Produkt mit einer reduzierten Korngröße von D99 = 15-18 µm.

### <Allgemeine Vorschrift 2 zur Erzeugung eines Lumineszenzpartikel-Agglomerats>

33 g NIR-Lumineszenzpigment werden in 245g Wasser dispergiert. Es werden 44g Kaliumhydrogencarbonat hinzugefügt und unter Rühren über den Verlauf einer Stunde eine Kaliumwasserglas-Lösung hinzugetropft, so dass am Ende ein SiO₂-Anteil von ca. 20% im Produkt vorliegt.

Das Produkt wird abfiltriert, zweimal mit 150 ml Wasser gewaschen und bei 60°C im Trockenschrank getrocknet. Es werden Partikelagglomerate mit einer Korngröße D99 = 18-20 µm erhalten.

### Nicht beanspruchtes Beispiel

Ausgehend von einem NIR-Lumineszenzpigment (Emission bei 1000 nm) mit einer mittleren Korngröße (A2) werden durch Zermahlen in einer Rührwerkskugelmühle ein feineres Pigment (A1), sowie durch kontrollierte Agglomeration nach Vorschrift 2 ein gröberes Pigment (A3) hergestellt (siehe Tabelle 2).

Durch identische Behandlung eines zweiten NIR-Lumineszenzpigments, das sich vom ersten NIR-Lumineszenzpigment in der Wellenlänge der Emission (1082 nm) unterscheidet, werden die analogen Pigmente B1, B2 und B3 hergestellt.

**Tabelle 2: Korngrößen der Pigmente**

| Bezeichnung | D50 [µm] | D90 [µm] | D99 [µm] |
|---|---|---|---|
| A1/B1 | 0,3 | 1,4 | 2,2 |
| A2/B2 | 2,4 | 7 | 11,4 |
| A3/ B3 | 11 | 16 | 20 |

Anschließend werden in einem Blattbildner Papier-Blätter mit unterschiedlichen Kombinationen eines A-Pigments und eines B-Pigments hergestellt. Dabei werden die Lumineszenzpigmente in passenden Konzentrationen eingesetzt, typischerweise 0,1 Gewichtsprozent für die Pigmente A2, B2, A3 und B3, so dass in allen Blättern eine im Mittel gleich starke Lumineszenzintensität erhalten wird. Die Pigmente A1 bzw. B1 werden entsprechend höher dosiert, z.B. mit 0,2 Gewichtsprozent, um ihre aufgrund der kleinen Korngröße verringerte Lumineszenzintensität zu kompensieren.

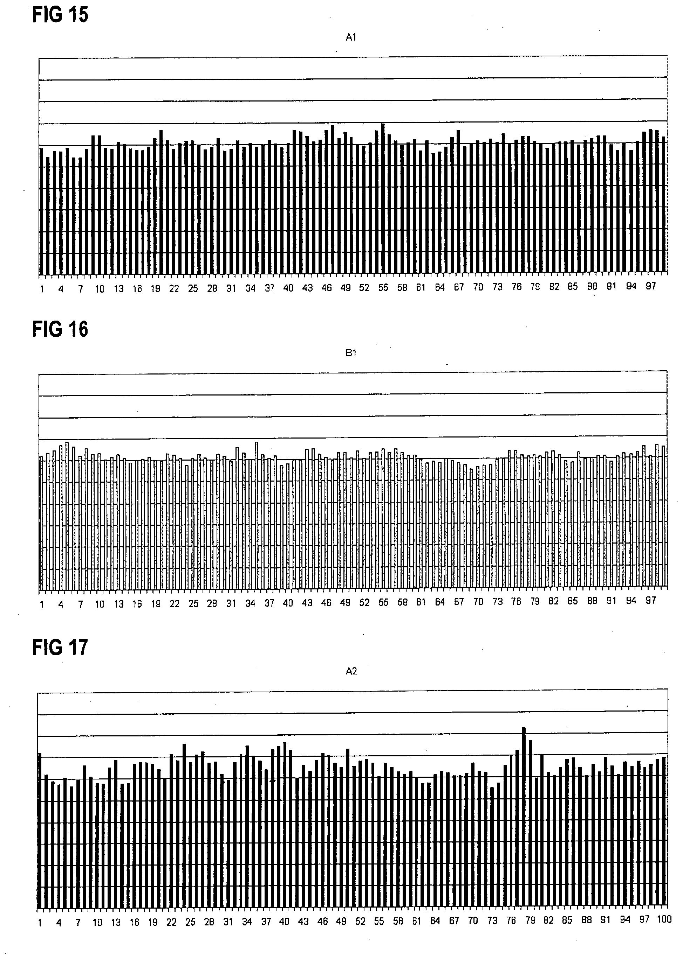

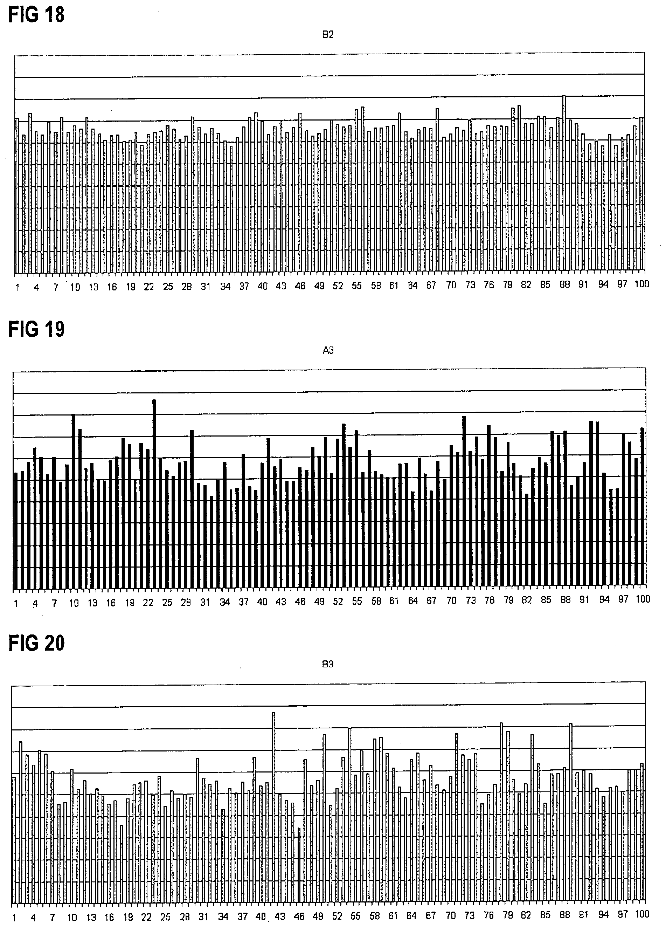

Die Lumineszenzintensität des A-Pigments sowie des B-Pigments bei ihren jeweiligen Emissionswellenlängen werden anschließend an mehreren unterschiedlichen Stellen (Größe des Meßflecks < 1 mm²) des Blattes gemessen (siehe Figuren 15 bis 20).

Figuren 15 bis 20 zeigen die Lumineszenzintensität bei 1000 nm (A1, A2, A3) bzw. 1080 nm (B1, B2, B3) an jeweils 100 verschiedenen Stellen eines die entsprechenden Lumineszenzpigmente enthaltenden Blatts.

Anhand der Figuren 15 bis 20 ist ein deutlicher Einfluss der Korngröße auf die räumliche Homogenität der Signalintensität erkennbar. Mathematisch lässt sich dieser Sachverhalt beispielsweise durch Angabe der Standardabweichung der Lumineszenzintensität an 100 unterschiedlichen Messpunkten angeben. Sie liegt für die Pigmente A1 bzw. B1 mit geringer Korngröße typischerweise im Bereich von 25 bis 35, für die Pigmente A2 bzw. B2 mit mittlerer Korngröße typischerweise im Bereich von 45 bis 55, und für die Pigmente A3 bzw. B3 mit großer Korngröße typischerweise im Bereich von 95 bis 105. Der Mittelwert der Lumineszenzintensität liegt bei allen in den Beispielen verwendeten Blättern bei ungefähr 600 beliebig gewählten Einheiten.

Geht man davon aus, dass die Kombination der Lumineszenzpigmente A und B eine zur Absicherung eines Wertdokuments verwendete Lumineszenzstoffkodierung ist, so lassen sich durch Einbeziehung der Schwankungsbreite als Absicherungskriterium die Anzahl möglicher Kodierungen um den Faktor 9 erhöhen. Durch geschickte Manipulation der Korngrößenverteilung der eingesetzten Lumineszenzpigmente sind die neun Kombinationen A1+B1, A1+B2, A1+B3, A2+B1, A2+B2, A2+B3, A3+B1, A3+B2, A3+B3 voneinander unterscheidbar, obwohl die eingesetzten Pigmenttypen jeweils spektral identisch sind.

Die folgende Beschreibung beinhaltet bevorzugte Ausgestaltungen mit Bezug auf die Auswertung der Lumineszenzfluktuation im Allgemeinen.

Grundsätzlich kann die Fluktuation eines Merkmals absolut, relativ zu sich selbst, oder relativ zu der Fluktuation eines anderen Merkmals analysiert werden.

Als "absolut" wird hierin verstanden, dass z.B. überprüft wird, ob die mittlere Abweichung vom Signalmittelwert einen bestimmten absoluten Wert über- oder unterschreitet, oder ob die "Ausreißersignale", die durch eine bimodale Verteilung mit hohen Größenunterschieden entstehen, innerhalb eines bestimmten Wertebereichs der Signalintensität liegen. Ebenso kann analysiert werden, ob die prozentuale Anzahl an Messstellen mit einer spezifischen Eigenschaft, z.B. das Überschreiten eines bestimmten Schwellwerts, innerhalb eines festgelegten Bereichs liegt.

Die Bezeichnung "relativ zu sich selbst" bezeichnet hierin Verfahren, in denen keine Absolutwerte überprüft werden, sondern in denen beispielsweise überprüft wird, ob die mittlere Abweichung relativ zum Mittel der Merkmalsintensität innerhalb oder außerhalb eines bestimmten Prozentsatzes liegt.

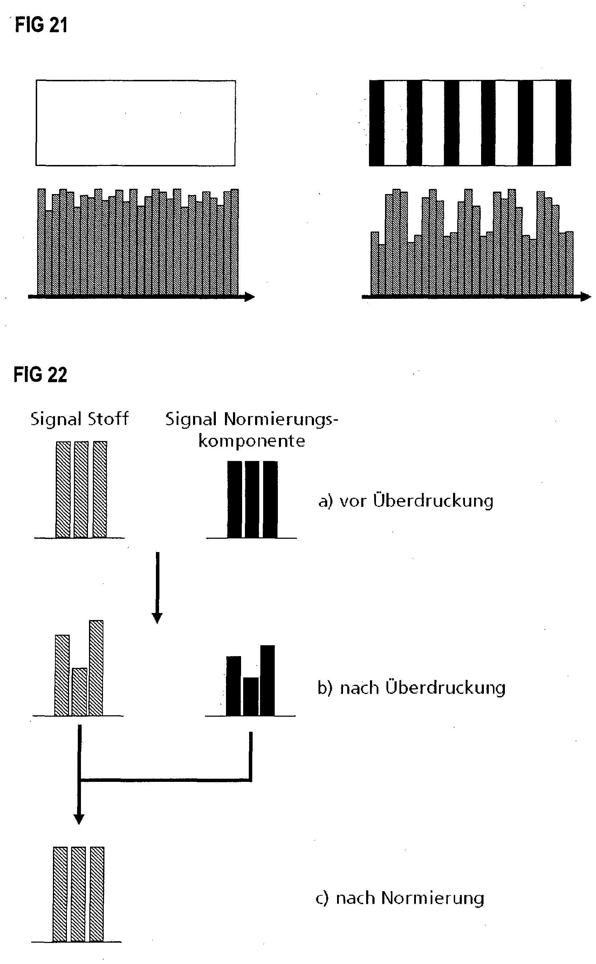

Für viele Anwendungen ist jedoch die dritte Methode, die Messung der Fluktuation "relativ zu einem anderen Merkmal", besonders vorteilhaft. Insbesondere wären hierbei die Fälle zu nennen, in denen sich Fremdeffekte, wie etwa eine Überdruckung der Banknote oder ein Wasserzeichen (d.h. eine lokale Dicken- oder Dichtenänderung im Papiersubstrat), störend auf die Messungen auswirken. So verursacht z.B. die Überdruckung mit einem Streifenmuster, das die Anregungswellenlänge teilweise absorbiert, eine Fluktuation des Merkmalsignals, die nicht durch die Natur des Merkmals allein entsteht (siehe Figur 21).

Figur 21 zeigt die durch Überdruckung mit einem Streifenmuster verursachte Lumineszenzfluktuation.

Wird jedoch ein zweites Merkmal hinzugefügt, dessen Fluktuation durch das Streifenmuster auf ähnliche Art und Weise beeinflusst wird, lässt sich der störende Effekt durch Vergleich beider Signale kompensieren. So ist es z.B. möglich, einen "Normierstoff" mit einem räumlich besonders homogenen Signal hinzuzufügen, dessen Signalschwankung somit fast ausschließlich durch äußere Faktoren, wie etwa die Überdruckung, bestimmt wird. Durch Korrektur eines Merkmalssignals durch das an der Messstelle gemessene Signal des Normierstoffs werden diese äußeren Faktoren somit "herausgerechnet" (Figur 22).

Figur 22 zeigt die Eliminierung von Überdruckungseffekten durch Zugabe einer Normierungskomponente.

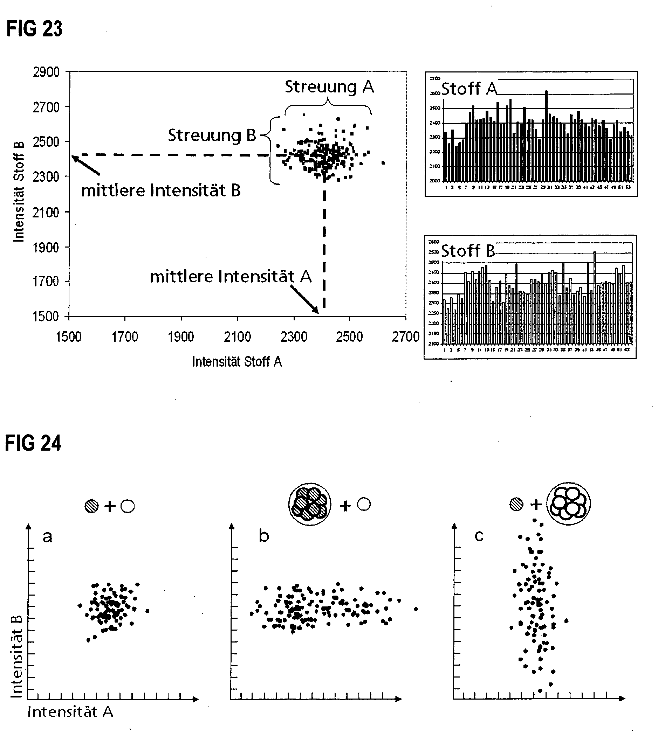

Die Methode ist dabei nicht nur auf die Ausführungsform eines solchen "signalhomogenen Normierstoffs" beschränkt. So lässt sich z.B. auch das relative Ausmaß der Fluktuation zweier Stoffe miteinander vergleichen. Zur Erklärung dieser Zusammenhänge bietet sich die Darstellung in Form von Punktwolken an (siehe Figur 23). Die Position des Wolkenmittelpunkts gibt dabei Aufschluss über die mittleren Signalintensitäten, und die Ausdehnung der Wolke zeigt das Ausmaß an Signalfluktuation an.

Figur 23 zeigt eine Punktwolken-Darstellung der Signalintensitäten zweier Merkmale an der jeweils gleichen Messstelle.

Als Anwendungsbeispiel zeigt Figur 24 verschiedene Kombinationen aus feinen und groben Partikeln zweier Luminophore in jeweils einem Blatt. Dabei bestehen die "groben" Luminophorpartikel jeweils aus mit Silika verkapselten Agglomeraten der "feinen" Luminophore. Es ist deutlich erkennbar, dass die Agglomerate stärker fluktuieren (breitere Punktwolken).

Figur 24 zeigt Punktwolken für verschiedene Kombinationen aus feinen und groben Luminophoren.

Idealisierte Punktwolken weiterer Stoffkombinationen sind in Figur 25 abgebildet. Es ist deutlich zu erkennen, dass sich die Punktwolken verschiedener Kombinationen z.B. in ihrem Längen- zu Breitenverhältnis oder in ihrer Ausdehnung stark unterscheiden. Die Ausdehnung solcher Punktwolken kann z.B. mathematisch über die Abstände geeigneter Quantile erfasst werden, um so die Fluktuation der beiden Merkmale relativ zueinander zu vergleichen und verschiedene Kodierungen voneinander zu unterscheiden.

Natürlich ist eine Auswertung auch über Kombination der Überprüfung von absoluten und relativen Grenzwerten, sowie durch eine Kombination der Einzelbetrachtung des Merkmals und des Vergleichs mit einer (oder mehreren) zusätzlichen Komponente(n) möglich.

Ebenso sind nicht alle Auswertungsverfahren für alle Kombinationsmöglichkeiten gleich gut geeignet. Bei stark bimodalen Verteilungen z.B. ist eine Berücksichtigung von Überdruckungseffekten etc. meistens unnötig, da die Signalunterschiede zwischen kleinen und großen Partikeln groß genug sind, um trotzdem eindeutig von einer monomodalen Verteilung unterscheidbar zu sein. Ein Vergleich mit z.B. einer zweiten Merkmalskomponente ist in diesem Fall nicht zwingend notwendig.

Grundsätzlich können die erfindungsgemäß verwendeten lumineszierenden Stoffe im Wertdokument selbst, insbesondere im Papiersubstrat, eingebracht sein. Zusätzlich oder alternativ können die lumineszierenden Stoffe auf dem Wertdokument aufgebracht sein (z.B. können die lumineszierenden Stoffe auf dem Papiersubstrat aufgedruckt sein). Bei dem Wertdokumentsubstrat muss es sich nicht zwangsläufig um ein Papiersubstrat handeln, es könnte auch ein Kunststoffsubstrat sein oder ein Substrat, das sowohl Papier-Bestandteile als auch Kunststoffbestandteile aufweist.

Die obigen Ausführungsbeispiele basieren auf lumineszierenden Merkmalsstoffen.

## Patentansprüche

1. Verfahren zum Herstellen eines Wertdokuments, das erste lumineszierende Partikel, die mit einer ersten Emissionswellenlänge emittieren, aufweist, wobei die ersten lumineszierenden Partikel mit bimodaler Größenverteilung, d.h. mit zwei voneinander abgegrenzten, bestimmten Größen, gebildet sind, und die ersten lumineszierenden Partikel in homogener Verteilung im Wertdokument vorliegen, wobei das Wertdokument angepasst ist an ein Verfahren zur Prüfung, nämlich der Echtheit und/oder des Nennwerts, des Wertdokuments umfassend die folgenden Schritte:
a1) den Schritt des Durchführens einer ortspezifischen Messung von ersten Lumineszenzintensitäten (L1) bei einer ersten Emissionswellenlänge an verschiedenen, die Ortskoordinaten (O) aufweisenden Orten des Wertdokuments, um auf diese Weise (O/L1)-Meßwertpaare zu gewinnen;
b1) den Schritt des statistischen Analysierens der in Abhängigkeit von den einzelnen Ortskoordinaten (O) gemessenen ersten Lumineszenzintensitäten (L1), indem anhand einer statistischen Methode zumindest eine statistische Kenngröße bestimmt wird; und
c1) den Schritt des Vergleichens der im Schritt b1) bestimmten statistischen Kenngröße mit einem oder mehreren Schwellwerten;
wobei die im Schritt b1) genannten Lumineszenzintensitäten eine bimodale Häufigkeitsverteilung bilden, d.h. in einem Histogramm, in dem die relative Häufigkeit in Abhängigkeit von der Intensität aufgetragen wird, hat die Häufigkeitsverteilung die Form von insgesamt zwei Gipfeln mit genau zwei Maxima, wobei die bimodale Größenverteilung im Histogramm so ausgestaltet ist, dass das eine Maximum mit Bezug auf dessen Korngröße anderthalb bis 50 Mal größer als das andere Maximum ist;
wobei das Verfahren zum Herstellen des Wertdokuments den Schritt des Erzeugens der bimodalen Größenverteilung durch ein Gemisch aus kleineren Partikeln und größeren Partikeln umfasst,
**dadurch gekennzeichnet, dass** die größeren Partikel lumineszierende, partikuläre Agglomerate einer festen homogenen Phase eines Luminophors sind, erhalten durch kontrollierte Agglomeration von mittels Vermahlen erhaltenem Feinmaterial zu größeren Partikel-Einheiten, sodass eine monomodale Korngrößenverteilung in einem Bereich von 10 µm bis 20 µm erreicht wird, und die kleineren Partikel gemahlenes Material mit einer Korngröße in einem Bereich von 1 µm bis 10 µm sind.

2. Verfahren nach Anspruch 1, wobei die bimodale Größenverteilung im Histogramm so ausgestaltet ist, dass das eine Maximum mit Bezug auf dessen Korngröße 2 bis 20 Mal, bevorzugt 4 bis 10 Mal, größer als das andere Maximum ist.

3. Verfahren nach einem der Ansprüche 1 oder 2, wobei die Korngröße (D99) der lumineszierenden Partikel kleiner als 30µm, bevorzugt kleiner als 20µm, ist.

## Claims

1. Method for producing a document of value comprising first luminescent particles which emit at a first emission wavelength, the first luminescent particles being formed with a bimodal size distribution, i.e. with two defined sizes delimited from one another, and the first luminescent particles being present in homogeneous distribution in the document of value, the document of value being adapted to a method for the checking, specifically of the authenticity and/or of the face value, of the document of value, comprising the following steps:
a1) the step of performing a site-specific measurement of first luminescence intensities (L1) at a first emission wavelength at various sites on the document of value having the site coordinates (O), in order thus to obtain (O/L1) measurement value pairs;
b1) the step of statistically analysing the first luminescence intensities (L1) measured as a function of the individual site coordinates (0), by using a statistical technique to determine at least one statistical parameter; and
c1) the step of comparing the statistical parameter determined in step b1) with one or more threshold values;
wherein the luminescence intensities stated in step b1) form a bimodal frequency distribution, i.e. in a histogram in which the relative frequency is plotted as a function of the intensity, the frequency distribution has the form of a total of two peaks having exactly two maxima, the bimodal size distribution in the histogram being configured such that one maximum in respect of its particle size is one and a half to 50 times greater than the other maximum;
wherein the method for producing the document of value comprises the step of generating the bimodal size distribution through a mixture of smaller particles and larger particles,
**characterized in that** the larger particles are luminescent, particulate agglomerates of a solid homogeneous phase of a luminophore, obtained by controlled agglomeration of fine material, obtained by grinding, to give larger particle units, so that a monomodal particle size distribution in a range from 10 µm to 20 µm is attained, and the smaller particles are ground material having a particle size in a range from 1 µm to 10 µm.

2. Method according to Claim 1, wherein the bimodal size distribution in the histogram is configured such that one maximum in respect of its particle size is 2 to 20 times, preferably 4 to 10 times, greater than the other maximum.

3. Method according to either of Claims 1 and 2, wherein the particle size (D99) of the luminescent particles is less than 30 µm, preferably less than 20 µm.

## Revendications

1. Procédé de fabrication d'un document de valeur qui présente des premières particules luminescentes qui émettent avec une première longueur d'onde d'émission, les premières particules luminescentes étant formées avec une distribution de tailles bimodale, c'est-à-dire avec deux tailles déterminées, délimitées l'une de l'autre, et les premières particules luminescentes étant présentes en une distribution homogène dans le document de valeur, le document de valeur étant adapté à un procédé de vérification, à savoir de l'authenticité et/ou de la valeur nominale, du document de valeur comprenant les étapes suivantes :
a1) l'étape de réalisation d'une mesure spécifique à un emplacement de premières intensités de luminescence (L1) à une première longueur d'onde d'émissions à différents emplacements présentant les coordonnées spatiales (O) du document de valeur afin d'obtenir ainsi des paires de valeurs de mesure (O/L1) ;
b1) l'étape d'analyse statistique des premières intensités de luminescence (L1) mesurées en fonction des coordonnées spatiales individuelles (O), en déterminant, au moyen d'une méthode statistique, au moins une grandeur caractéristique ; et
c1) l'étape de comparaison des grandeurs caractéristiques statistiques déterminées dans l'étape b1) avec une ou plusieurs valeurs seuils ;
l'intensités de luminescence mentionnées dans l'étape b1) formant une distribution de fréquences bimodale, c'est-à-dire dans un histogramme, dans lequel la fréquence relative est indiquée en fonction de l'intensité, la distribution de fréquences a la forme d'au total deux sommets comportant exactement deux maxima, la distribution de tailles bimodale étant agencée dans l'histogramme de telle manière qu'un maximum soit une fois et demie à 50 fois plus grand que l'autre maximum en ce qui concerne sa taille de grains ;
le procédé de fabrication du document de valeur comprenant l'étape de génération de la distribution de tailles bimodale par un mélange de particules plus petites et de particules plus grosses,
**caractérisé en ce que** les particules plus grosses sont des agglomérats luminescents, particulaires d'une phase homogène solide d'un luminophore, obtenus par agglomération contrôlée d'un matériau fin obtenu au moyen d'un broyage pour donner des unités de particules plus grosses, de sorte qu'une distribution de tailles de grains monomodale dans une plage de 10 µm à 20 µm soit atteinte, et les particules plus petites étant un matériau broyé doté d'une taille de grains dans une plage de 1 µm à 10 µm.

2. Procédé selon la revendication 1, la distribution de tailles bimodale dans l'histogramme étant agencée de telle manière qu'un maximum soit 2 à 20 fois, préférablement 4 à 10 fois, plus grand que l'autre maximum en ce qui concerne sa taille de grains.

3. Procédé selon l'une quelconque des revendications 1 ou 2, la taille de grains (D99) des particules luminescentes étant plus petite que 30 µm, préférablement plus petite que 20 µm.
